# FASCICULE DE BREVET EUROPEEN

(11) **EP 0 903 924 B1**
(45) Date de publication et mention de la délivrance du brevet: **12.12.2001**
(21) Numéro de dépôt: 98402319.2
(22) Date de dépôt: 21.09.1998
(51) Int. Cl.: H04M 11/00

(54) **Système de télésurveillance du dysfonctionnement d'un ou plusieurs appareils installés sur un site**
Funktionsstörungsfernüberwachungssystem von einem oder mehreren auf einem Ort installierten Geräten
Remote monitoring system of the failure of one or more apparatuses installed on a site

(30) Priorité: 22.09.1997 FR 9711771; 05.02.1998 FR 9801369
(43) Date de publication de la demande: 24.03.1999
(73) Titulaire: FRANCE TELECOM, 75015 Paris (FR)
(72) Inventeur: Hillereau, Bertrand, 94230 Cachan (FR)
(74) Mandataire: Ballot, Paul

(56) Documents cités:
- WO-A-97/25808
- GB-A- 2 230 163
- US-A- 4 232 195

## Description

La présente invention concerne le domaine de la télésurveillance d'un site notamment la télésurveillance d'appareils électriques et non électriques.

Dans le domaine de la télésurveillance, on connaît déjà des systèmes consistant à équiper un site d'un détecteur de présence (radar infra-rouge ou hyperfréquence) relié à un répondeur-enregistreur programmé pour effectuer automatiquement un numéro de téléphone prévenant la police ou le propriétaire des lieux.

On connaît également un système connu sous son nom commercial "Axiophone", permettant non pas l'interrogation à distance, mais la commande à distance du démarrage ou de l'arrêt d'un appareil électrique sur un appel téléphonique. Il s'agit d'un système de télécommande d'appareil électrique par le réseau téléphonique sans connaissance de l'état de l'installation électrique.

On connaît alors un autre système, le système connu sous son nom commercial "Typhone 2", permettant la télécommande d'appareils électriques par le réseau téléphonique et donnant une indication de l'état des sorties du dispositif de commande des appareils électriques permettant ainsi théoriquement sur appel téléphonique de savoir si l'un des appareils électriques relié au dispositif est en arrêt ou en marche.

Toutefois, ce dispositif présente toujours des inconvénients:
- En effet, l'indication de marche ou d'arrêt des appareils électriques n'est que théorique car cette indication ne porte que sur l'état des sorties que sont les interrupteurs de commande et non sur l'état des appareils à proprement parler. Ce dispositif ne permet de savoir que si les sorties sont alimentées électriquement ou non. En outre la mémorisation des états de sortie permet, lors de l'interrogation, de connaître le dernier état. S'il y a eu une coupure de l'alimentation électrique de courte durée cela n'a pas d'incidence parce que l'ensemble va re-fonctionner normalement dès que la coupure cesse. En revanche, si le disjoncteur est déclenché l'état mémorisé donne une mauvaise indication car le disjoncteur ne se réenclenchera pas.
- Son prix reste excessif.
- Il permet de savoir si un appareil électrique est alimenté ou non, de l'alimenter à distance le cas échéant mais il ne possède pas de fonction de répondeur-enregistreur interrogeable à distance.
- La cible de ce dispositif est réduite aux appareils électriques, il ne s'applique pas aux autres cas comme la connaissance de la température intérieure d'un congélateur, ni la température d'une maison même si la chaudière est au gaz, ou encore le degré d'humidité d'une pelouse qui doit être arrosée.

Toutefois, ces systèmes ne sont plus utiles si le disjoncteur du réseau d'alimentation électrique ou un disjoncteur de circuit est disjoncté.

Face à cet inconvénient, il est concevable d'installer un réenclencheur de disjoncteur mais il présente deux inconvénients majeurs:
1 - En cas de défaut grave sur l'installation électrique, à chaque fois que l'utilisateur tente de réenclencher le disjoncteur, il réalimente en électricité un circuit en défaut et amplifie ce défaut jusqu'au court-circuit avec par conséquent des risques d'incendie.
2 - Chaque dispositif ne réenclenche qu'un type de disjoncteur (disjoncteur du réseau ou à circuit) or, en général, les deux types de disjoncteurs sont hors service simultanément.

Il faut donc investir dans ces dispositifs très coûteux de réenclenchement pour bénéficier d'un système qui peut s'avérer malgré tout dangereux.

On connaît également des systèmes à transmetteur téléphonique. Dans de tels systèmes une alarme est reliée au transmetteur de manière à lancer un numéro d'appel lorsque l'alarme se déclenche. De tels systèmes sont nécessairement reliés à une centrale d'alarme.

L'objectif de la présente invention est donc de parer à ces inconvénients en proposant un dispositif faisant certes appel à une intervention humaine, mais beaucoup plus simple, fiable et peu coûteux aussi bien pour son installation que pour son utilisation.

L'invention propose l'utilisation d'un répondeur-enregistreur comportant outre les fonctions de répondeur habituelles, des fonctions supplémentaires de télésurveillance d'appareils électriques dans le cas de coupure de courant et de télésurveillance pour détecter un dysfonctionnement d'un appareil qu'il soit d'origine électrique ou toute autre.

A cette fin, le répondeur enregistreur est branché sur l'alimentation générale qui sert à alimenter l'appareil à surveiller via des capteurs qui vont délivrer des signaux permettant selon un mode particulier de réalisation d'enregistrer des messages relatifs aux mesures effectuées et dans tous les cas de réalisation, de provoquer une coupure de l'alimentation du dispositif répondeur-enregistreur en présence d'une anomalie de fonctionnement.

On pourra se reporter à l'état de la technique le plus proche constitué par le document WO 97 25808 du 17 juillet 1997.

Ainsi, la présente invention a plus particulièrement pour objet un premier système de télésurveillance du dysfonctionnement d'un ou plusieurs appareils installés sur un site, principalement caractérisé en ce qu'il comporte :
- des moyens de détection d'une coupure de l'alimentation électrique générale desdits appareils, ces moyens comprenant un dispositif répondeur-enregistreur téléphonique ou transmetteur téléphonique susceptible de fournir un message en l'absence de dysfonctionnement des appareils,
- un ou plusieurs capteurs aptes à fournir des signaux de mesure significatifs du fonctionnement d'un ou plusieurs appareils du site,
- un ou plusieurs dispositifs à contact agissant en réponse à une coupure de l'alimentation électrique ou en réponse à la commande des capteurs:
   1) pour couper l'alimentation électrique du répondeur-enregistreur,
   2) ou pour couper l'alimentation électrique d'un relais de commande de boucle de déclenchement du transmetteur téléphonique,
   lesdits répondeur-enregistreur ou transmetteur n'étant plus alors aptes à fournir de message.

**Selon une autre caractéristique,**
- le dispositif répondeur-enregistreur comportant en outre une alimentation interne pour l'enregistrement et la sauvegarde des messages représentatifs des signaux délivrés par les capteurs en réponse à la commande des capteurs ou en réponse à une coupure de l'alimentation électrique générale,
   **Lorsque le** répondeur-enregistreur ne comporte pas d'alimentation interne, en fonctionnement normal, le message émis est un message d'accueil. En cas de coupure de l'alimentation électrique générale ou de dysfonctionnement d'un appareil surveillé de l'installation, le répondeur n'est plus alimenté, le message d'accueil ne peut plus être émis. Ces dysfonctionnements sont détectés par l'absence de réponse du répondeur c'est à dire par une tonalité de non réponse.

De la même façon le transmetteur est implanté de manière à émettre un message à intervalles réguliers en l'absence de toute anomalie et d'arrêter toute émission, lors d'une coupure de son alimentation, ou dès détection de toute anomalie.

Les dispositifs à contact agissant en interrupteurs d'alimentation électrique sont des thermostats programmables.

Selon une autre caractéristique, ces interrupteurs d'alimentation électrique sont des programmateurs d'arrosage.

Selon une autre caractéristique, les capteurs sont des sondes de température, d'humidité de la terre, de niveau d'eau ou de pression, d'hygrométrie et de manière générale tout capteur apte à commander l'ouverture et la fermeture d'interrupteurs.

Selon une autre caractéristique les différents dispositifs à contact interrupteurs d'alimentation électrique du dispositif répondeur-enregistreur sont mis en série entre le secteur 220V et l'alimentation dudit dispositif.

Les avantages procurés par l'invention, seront mieux compris au travers de la description suivante qui se réfère aux dessins annexés qui illustrent l'invention sans caractère limitatif et sur lesquels:
- les figures 1A, 1B, 1C, représentent des schémas fonctionnels du système de télésurveillance selon l'invention,
- la figure 2, représente un exemple d'installation d'un système selon l'invention dans laquelle le répondeur est prévu pour une version évoluée avec quatre fonctions de surveillance,
- la figure 3, représente un schéma de principe électrique pour association en série de deux sondes avec le répondeur,
- figure 4, représente le schéma d'un mode de réalisation selon lequel le répondeur-enregistreur comporte une alimentation interne pour gérer l'enregistrement des signaux issus des capteur,
- la figure 5, représente le schéma de principe d'une interrogation à distance d'un répondeur,
- la figure 6, représente le schéma de principe d'une commande à distance d'un système de télésurveillance selon l'invention,
- la figure 7, représente un exemple d'installation avec transmetteur téléphonique (et éventuellement répondeur),
- les figures 8 et 9, représentent les schémas relatifs au mode de fonctionnement,
- la figure 10, représente le schéma électrique d' une variante d'exécution,
- les figures 11 et 12, représentent les schémas relatifs au mode de fonctionnement,
- la figure 13, représente le schéma électrique selon la figure 10 avec branchement également d'un répondeur.

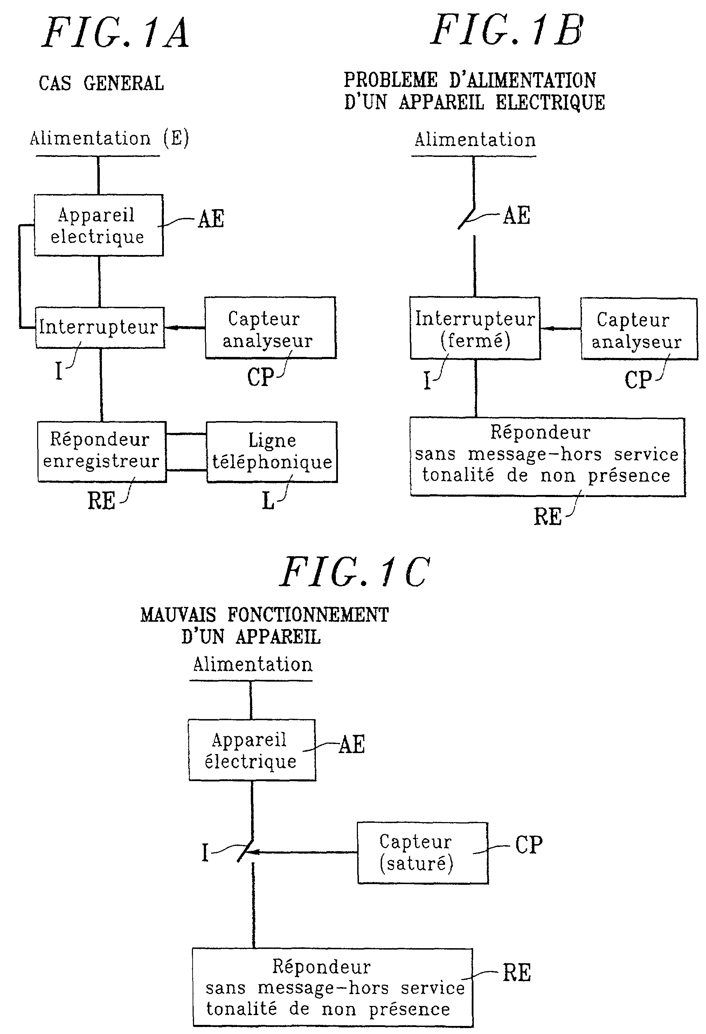

On a représenté sur la figure 1A le schéma fonctionnel d'une installation à surveiller selon le principe de l'invention.

Un ou plusieurs appareils électriques AE sont alimentés en courant par une alimentation électrique E (par exemple le réseau électrique 220V). Entre les appareils électriques et le répondeur on place des interrupteurs, bien entendu dans la mesure ou l'on ne recherche pas uniquement à détecter une coupure d'alimentation électrique. Ces interrupteurs sont actionnés par les appareils électriques AE ou par des capteurs reliés à ces appareils électriques ou par d'autres capteurs CP du site.

Le répondeur enregistreur RE est alimenté à travers ces interrupteurs. Dans le cas où un interrupteur est ouvert le répondeur n'est plus alimenté en courant. Le répondeur qui est relié à une ligne téléphonique L ne pourra pas en cas de coupure de courant par les interrupteurs diffuser de message d'accueil sur réception d'un appel téléphonique.

La figure 1B illustre le cas d'un problème d'alimentation électrique d'un appareil électrique.

La figure 1C illustre le cas de mauvais fonctionnement d'un appareil (électrique ou non) détecté par un capteur.

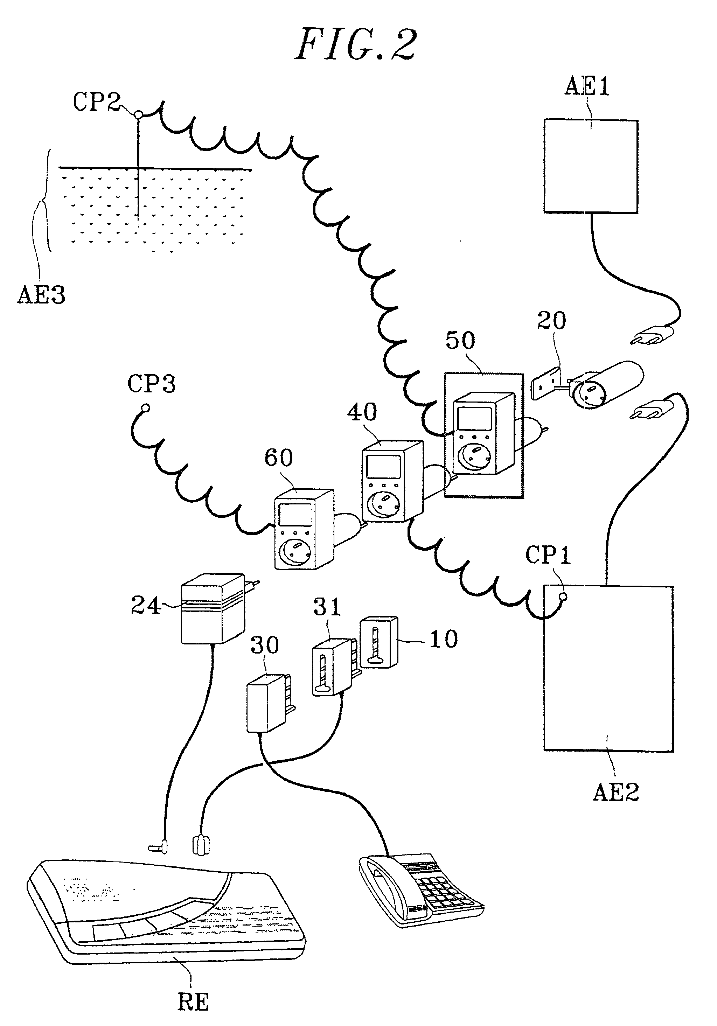

On peut se reporter pour la suite au schéma de la figure 2.

La mise en place du système est très simple pour l'utilisateur :

Si l'utilisateur désire simplement surveiller l'alimentation électrique d'un appareil, alors il choisira de préférence d'installer une prise de téléphone 8 plots 10 près de la prise 220 volts 20 qui alimente l'appareil électrique AE1 dont il veut surveiller le bon fonctionnement. Cet appareil pourra par exemple être une centrale d'alarme.

La fiche mâle téléphonique 30 du répondeur RE sera branchée sur la prise 8 plots femelles 10 à travers éventuellement une prise gigogne 31 et le cordon d'alimentation électrique 220 volts du répondeur sera branché sur la même prise électrique que l'appareil à surveiller à travers un adaptateur secteur 24.

Dans le cas où l'utilisateur désire en outre surveiller le bon fonctionnement d'un appareil AE2 tel qu'un congélateur, on intercale entre la prise 220 volts qui alimente l'appareil à surveiller et le répondeur, un thermostat programmable 40 avec une sonde CP1, situé dans le congélateur AE2 dans le cas présent.

Pour surveiller un autre ensemble AE3 non électrique tel que le degré d'humidité de la terre, on intercale un programmateur d'arrosage, sa sonde CP2 étant plantée dans la terre.

Pour surveiller un autre appareil non électrique tel qu'une chaudière à gaz et/ou si on désire contrôler la température ambiante d'une pièce ou d'un site, on utilisera un thermostat programmable relié à une sonde de température CP3.

L'utilisation de ce système est tout aussi simple.

Pendant l'absence sur le site, il suffit de composer le numéro de téléphone de l'installation où est raccordé le répondeur.

Si le répondeur se déclenche et fait entendre son message préalablement enregistré, c'est qu'il est alimenté en 220 volts et donc que le circuit qui alimente les appareils, est en service.

Sinon, ledit circuit n'est pas alimenté en 220 volts, donc un des appareils ne fonctionne plus ou mal. Il faut alors téléphoner à une personne désignée pour visiter l'installation.

En effet, si le répondeur ne répond pas (absence du message d'accueil) et qu'il y a une tonalité de non-réponse, il se peut que l'un des disjoncteurs soit disjoncté : disjoncteur principal du réseau d'alimentation, ou disjoncteur différentiel haute sensibilité, ou disjoncteur de circuit, ou encore les sondes ont détecté des défauts, le circuit du système est alors ouvert soit au niveau de l'un des disjoncteurs soit au niveau des sondes et le répondeur n'est donc plus alimenté. La visite de la personne désignée permet de réenclencher les disjoncteurs ou de remédier aux défauts de l'appareil ou de débrancher l'appareil en défaut.

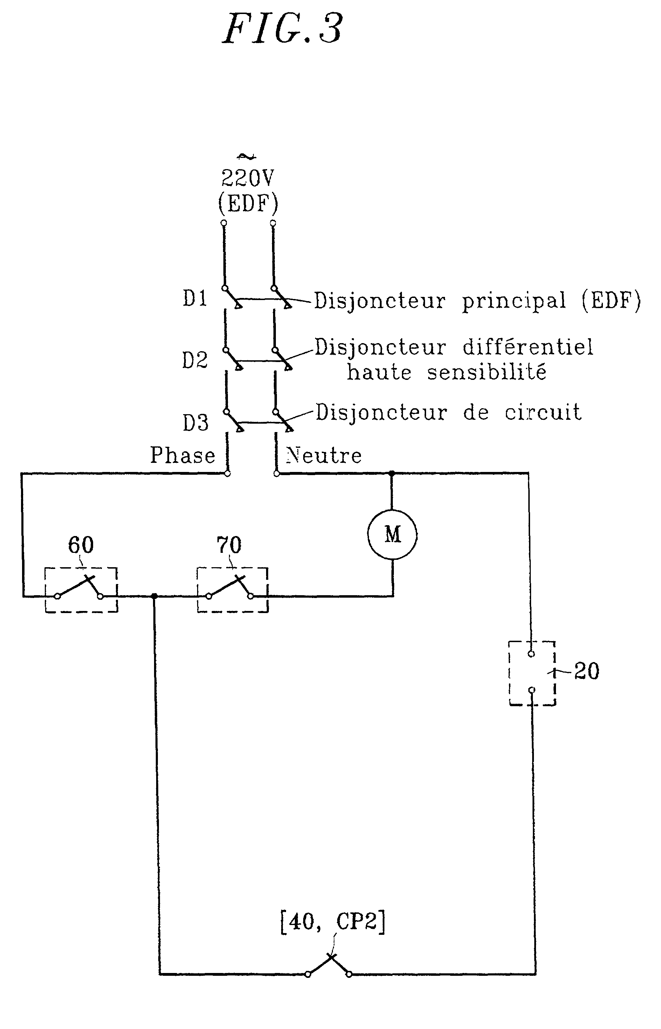

Le schéma de la figure 3 permet d'illustrer les branchements électriques dans le cas d'un système de télésurveillance d'un pompage d'eau automatique (exemple : un arrosage), d'un congélateur ou d'une chaudière.

Dans cet exemple l'arrêt du répondeur peut également être dû à un dépassement du seuil critique de l'une des sondes :
- Soit la sonde CP2 placée dans un congélateur où la température normale doit être de -24°C. Le thermostat 40, qui agit comme un interrupteur et qui laisse passer ou non le courant jusqu'au répondeur, est programmé à l'avance au seuil de -15°C. Pour une température entre -15°C et -24°C détectée par la sonde, l'interrupteur est fermé, et le répondeur est alimenté.

Si un dysfonctionnement non électrique survient au niveau du congélateur lui-même, la température va s'élever jusqu'à atteindre le seuil critique de -15°C, le thermostat, tel un interrupteur ouvert, coupera l'alimentation du répondeur.

L'état des sondes 60 et 70 qui sont des mano-contacteurs d'une pompe à eau M est fonction de la pression de la pompe eau servant à l'arrosage.

Pour obtenir l'effet désiré suivant la présente invention, le premier contact 70 du manocontacteur, c'est-à-dire celui qui est fermé chaque fois que la pompe tourne et ouvert chaque fois que la pompe ne tourne pas, a été monté en deuxième position afin que ne soit pas décelé un mauvais fonctionnement du système du fait des arrêts "normaux" de la pompe M. Le deuxième contact 60 a par conséquent été monté en première position. Ce contact s'ouvre quand il n'y a plus de pression dans le circuit d'eau. Lorsque la pompe est en état de fonctionnement ce contact est fermé.

Ainsi, en fonctionnement normal le contact 60 sera fermé si la pression est supérieure ou égale à 2 bars et ouvert si cette pression est inférieure à 2 bars (défaut détecté par le système). Le contact 70 est ouvert si la pression est inférieure à 2,2 bars ou si elle est supérieure à 3,3 bars. Ce contact est fermé lorsque la pression est comprise entre 2,2 et 3,2 et que le moteur de la pompe tourne.

Il est aussi possible, si le répondeur ne se déclenche pas et qu'il y a une tonalité d'occupation que la ligne de téléphone soit en dérangement, ce qui est statistiquement rare.

On peut prévoir bien sur, une gestion des signaux issus des capteurs afin de connaître la nature du dysfonctionnement ce qui n'est pas fait dans les modes de fonctionnement décrits précédemment. Pour cela, on pourra par exemple utiliser un répondeur qui dispose d'une alimentation électrique interne servant à la mémorisation de messages relatifs aux dysfonctionnements détectés.

Dans tous les cas une intervention humaine est nécessaire pour contrôler l'ensemble du système et agir en conséquence.

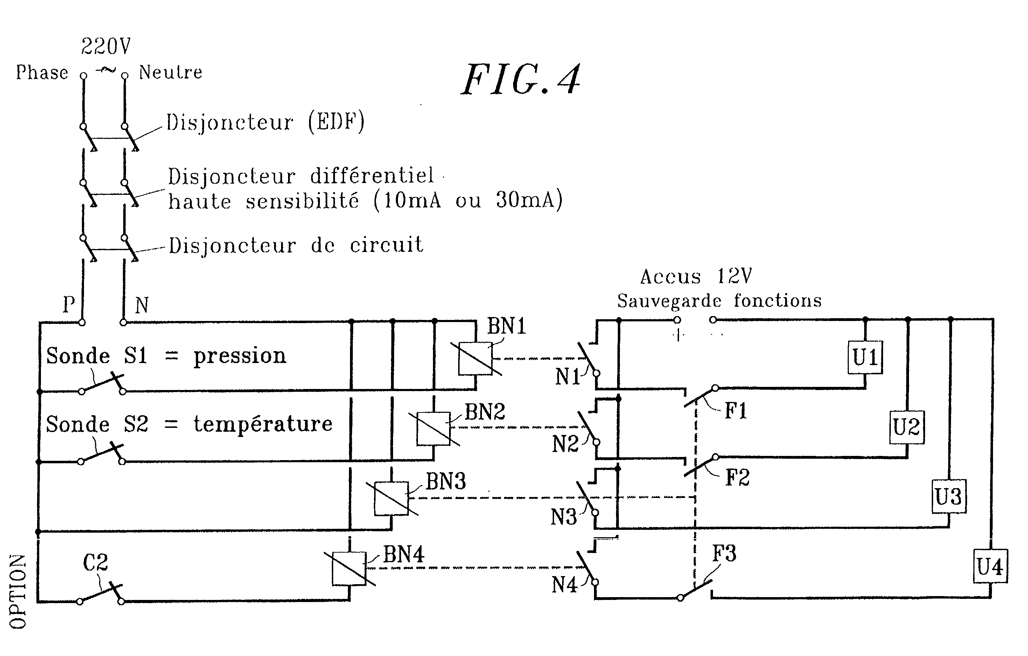

On va maintenant décrire en référence à la figure 4 un mode de réalisation dans lequel on prévoit une gestion des signaux issus des capteurs.

Cette réalisation permet d'assurer les fonctions d'interrogation de messages différenciées pour chaque type de défaut avec une option interrogation de circuit ouvert ou fermé dans le cas d'une commande à distance (cf. figure 4).

Comme cela a été dit, cette réalisation fait appel à un répondeur muni d'une alimentation interne (accumulateurs).

On rappelle tout d'abord quelques définition :
- contact à ouverture :
   contact ouvert quand la bobine est alimentée par courant (donc fermée dans le cas contraire).
- contact à fermeture :
   contact fermé quand la bobine est alimentée par courant (donc ouvert dans le cas contraire).

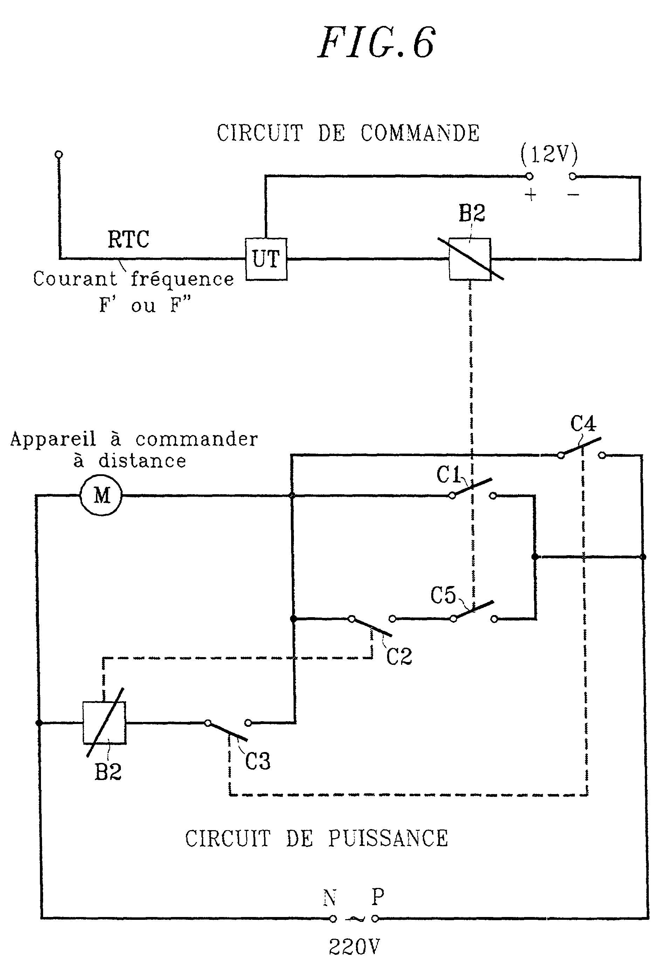

Sur le schéma de la figure 4 : les contacts N1, N2, N3 et N4 sont des contacts à ouverture, les contacts F1, F2, F3 sont des contacts à fermeture. Le contact C2 est auto-alimenté par la bobine B2 du système de commande à distance (cf. figure 6).

### Principe d'interrogation :

Les unités de traitement U1-U4 sont des microprocesseurs qui sont activés en cas de défaut par les divers relais et vont enregistrer sur la piste magnétique ou le disque le message de défaut approprié grâce à la fonction "MEMO" du répondeur-enregistreur téléphonique.

Une personne qui veut interroger à distance les messages classiques enregistrés sur le répondeur va effectuer l'opération à partir du clavier téléphonique : *0+ code confidentiel ce qui provoque une action 1 sur l'unité de traitement. Si cette personne veut interroger à distance les "MEMOS" qui sont soit des messages personnalisés, soit des messages de défaut, elle effectue l'opération *1+ code confidentiel ce qui provoque une action 2 sur l'unité de traitement.

Il est bien entendu qu'après suppression du défaut par une intervention au domicile, le message de défaut peut être effacé soit à distance, soit par la personne qui intervient au domicile, avec la fonction classique d'effacement ; ceci pour ne pas induire en erreur lors d'une interrogation ultérieure.

Exemple de message de défaut :
- Unité de traitement U1 :
   "Sonde pression en défaut",
- Unité de traitement U2 :
   "Sonde température en défaut",
- Unité de traitement U3 :
   "Défaut d'alimentation électrique",
- Unité de traitement U4 :
   "Le circuit de commande à distance est ouvert".

On va maintenant expliquer le fonctionnement du circuit en cas de défaut d'une sonde :
- les 3 disjoncteurs sont enclenchés, le courant arrive donc à la sonde S1. Celle-ci étant en défaut, l'interrupteur est ouvert. La bobine BN1 n'est donc plus alimentée en courant électrique 220 volts et le contact à ouverture N1 se ferme. L'unité de traitement U1 est donc activée et enregistre le message de défaut "Sonde de pression en défaut". Ce message pourra être interrogé à distance puis effacé après intervention de suppression de défaut.

N.B.: les 3 disjoncteurs étant enclenché, l'installation électrique intérieure est alimentée et la bobine BN3 maintient le contact à fermeture N1 dans la position fermée.

On va maintenant expliquer le fonctionnement du circuit en cas de défaut d'alimentation électrique :
- L'un des 3 disjoncteurs est déclenché (ou les 3 ensemble ...), la bobine BN3 n'est donc plus alimentée. Le contact à ouverture N3 se ferme, l'unité de traitement U3 est activée et enregistre le défaut "Défaut d'alimentation électrique". En même temps l'action de la bobine BN3 provoque l'ouverture de deux contacts à fermeture F1 et F2, ce qui interdit l'enregistrement des deux autres unités de traitement et privilégie un seul message de défaut.

On va maintenant expliquer le fonctionnement du circuit dans l'option commande à distance :
- Dans cette option on se reportera au schéma de la figure 6.

Le contact C2 est auto-alimenté par la bobine BN2 pour permettre l'alimentation de l'appareil électrique en commande à distance. S'il est ouvert l'appareil ne fonctionne plus. Ce contact se comporte donc comme celui de la sonde S1 ou S4.

Pour simplifier la compréhension on a représenté quatre unités de traitement. Bien entendu, une seule unité de traitement apte à mettre en oeuvre les quatre fonctions requises suffirait.

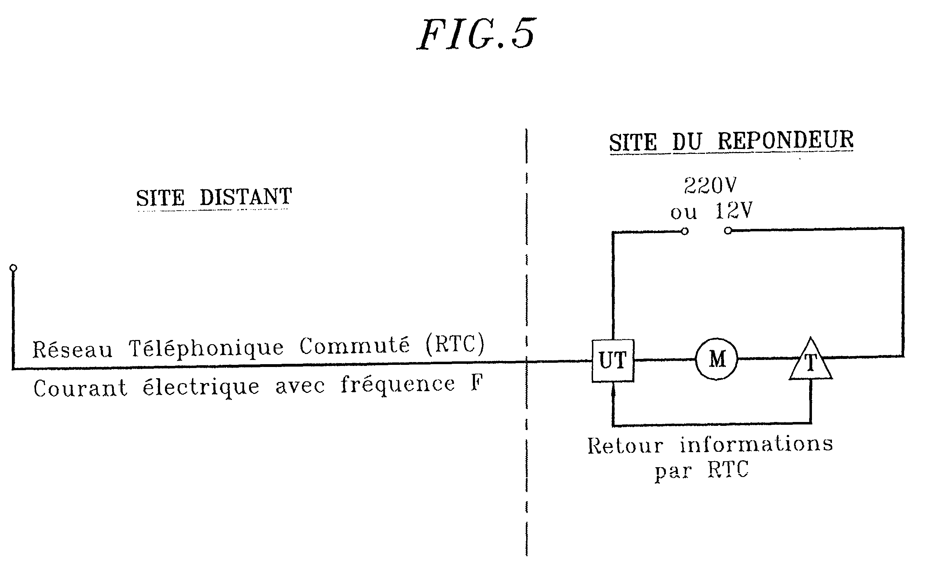

On rappelle tout d'abord avant d'expliquer comment s'effectue la commande d'ouverture-fermeture de circuit à distance, la fonction classique d'interrogation à distance des messages. Cette dernière est illustrée par le schéma de la figure 5.

L'opérateur placé sur un site distant du système de surveillance compose *0+ code confidentiel. Un courant électrique à une fréquence F est envoyé par le réseau téléphonique commuté (RTC) et arrive sur le site du répondeur. L'unité de traitement du répondeur UT reçoit ce signal et commande le moteur M de positionnement de la tête de lecture T de la cassette magnétique (ou disque).

Le répondeur est alimenté par l'alimentation réseau 220V ou un accumulateur de 12V en cas de coupure du réseau d'alimentation.

On va maintenant décrire la fonction de commande à distance du système.

Sur le site distant : l'opérateur compose au moyen des touches fonction d'un poste téléphonique à fréquence vocale programmé à cet effet, ≠1+ code confidentiel pour mettre en marche l'appareil à commander M (fréquence F'). Il compose *1+ code confidentiel pour arrêter l'appareil (fréquence f").

Le contact C4 est un shunt à commande manuelle ou automatique. Le contact C1 est un contact à fermeture. Le contact C2 est un relais auto-alimenté. Le contact C5 est un contact à fermeture. Le contact C3 est un contact à ouverture commandé par le shunt C4 (automatique ou manuel).

La commande peut être effectuée manuellement de la manière suivante :
- le contact C1 est ouvert car pas de fréquence d'activation de l'unité de traitement,
- l'opérateur ferme manuellement le contact C4,
- le contact C2 s'ouvre sur l'action du contact C4,
- la bobine B2 est donc inactive et le relais auto-alimenté est inactif. Le contact C2 est ouvert ce qui interdit un bouclage permanent du circuit si l'on désire arrêter l'appareil manuellement,
- l'action du contact C4 met en marche l'appareil. Celui-ci s'arrête dès que l'opérateur ouvre manuellement ce contact.

La commande de l'appareil peut être automatique de la manière suivante :
- l'opérateur compose ≠1+ code confidentiel et envoie donc une fréquence F' jusqu'à l'unité de traitement. Celle-ci alimente la bobine B1. Les contacts C1 et C5 sont donc fermés.
- le contact C4 du shunt manuel/auto étant ouvert, le contact C3 lui est fermé,
- la bobine B2 est donc active et le relais auto-alimenté aussi,
- donc, le contact C2 est auto-maintenu et permet l'alimentation de l'appareil électrique dès l'arrêt de la fréquence F' qui ouvre le contact C1.

Arrêt de l'appareil à distance :
- L'opérateur compose *1+ code confidentiel et envoie donc une fréquence F" jusqu'à l'unité de traitement. Celle-ci n'alimente plus la bobine B1? Les contacts C1 et C5 sont donc ouvert.
- Si le contact C5 est ouvert, la bobine B2 n'est plus alimentée et rend inactif le relais d'auto-alimentation du contact C2. Celui-ci s'ouvre et l'appareil n'est donc plus alimenté.

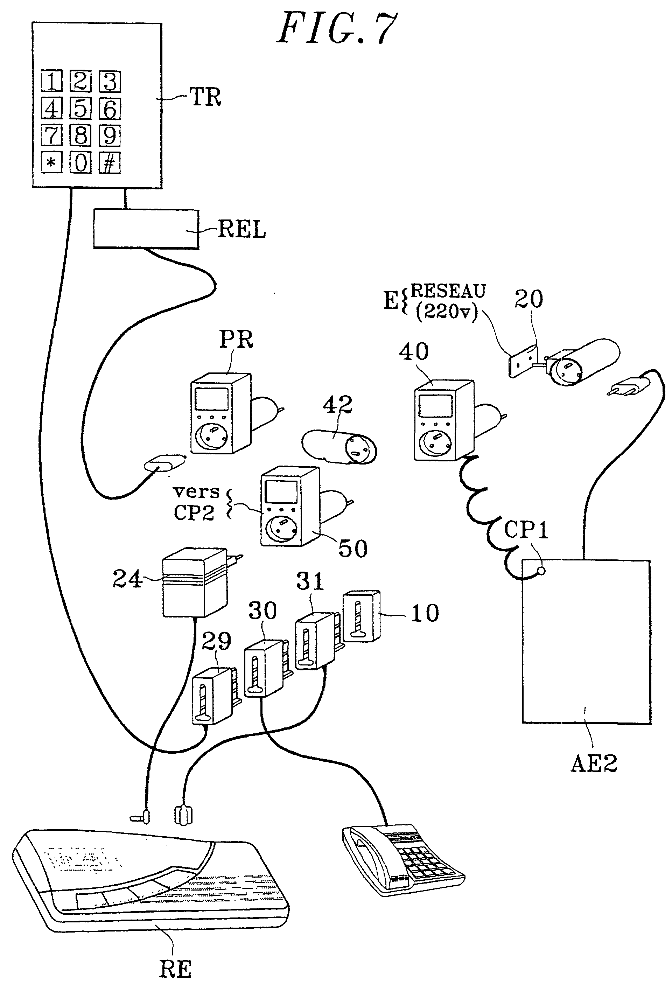

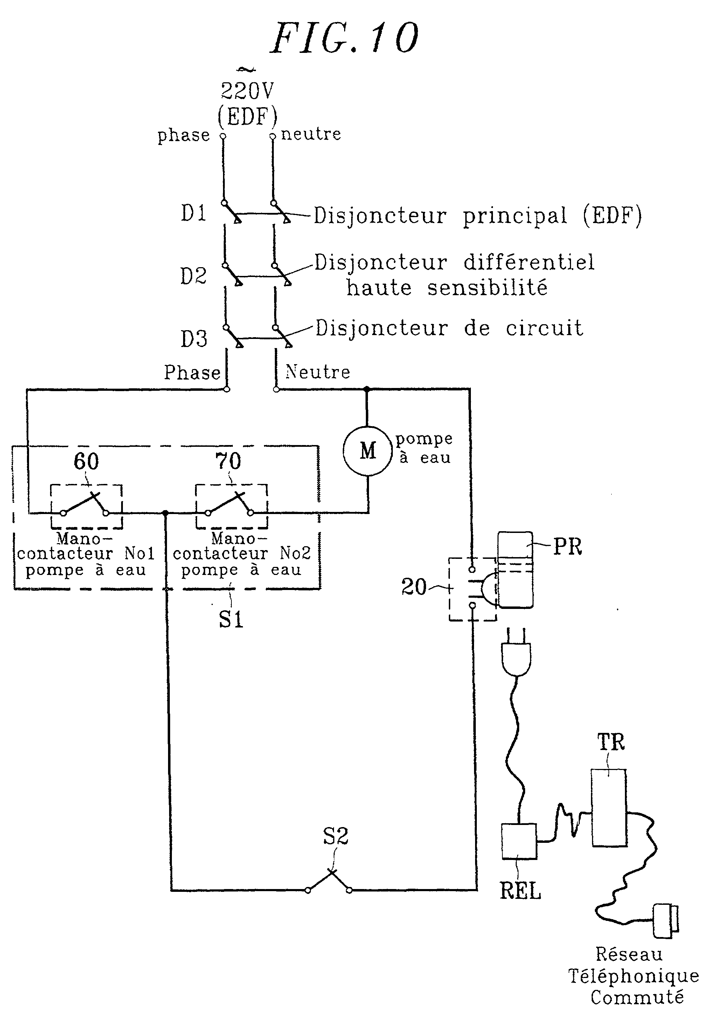

On va maintenant se reporter aux schémas des figures 7 et 10 sur lequels une autre variante de l'invention a été représentée. Il s'agit d'une variante dans laquelle le dysfonctionnement d'un appareil à surveiller est signalé par un transmetteur TR implanté dans l'installation de manière à effectuer des appels téléphoniques à des instants prédéterminés tant que l'installation ne présente pas de défaut.

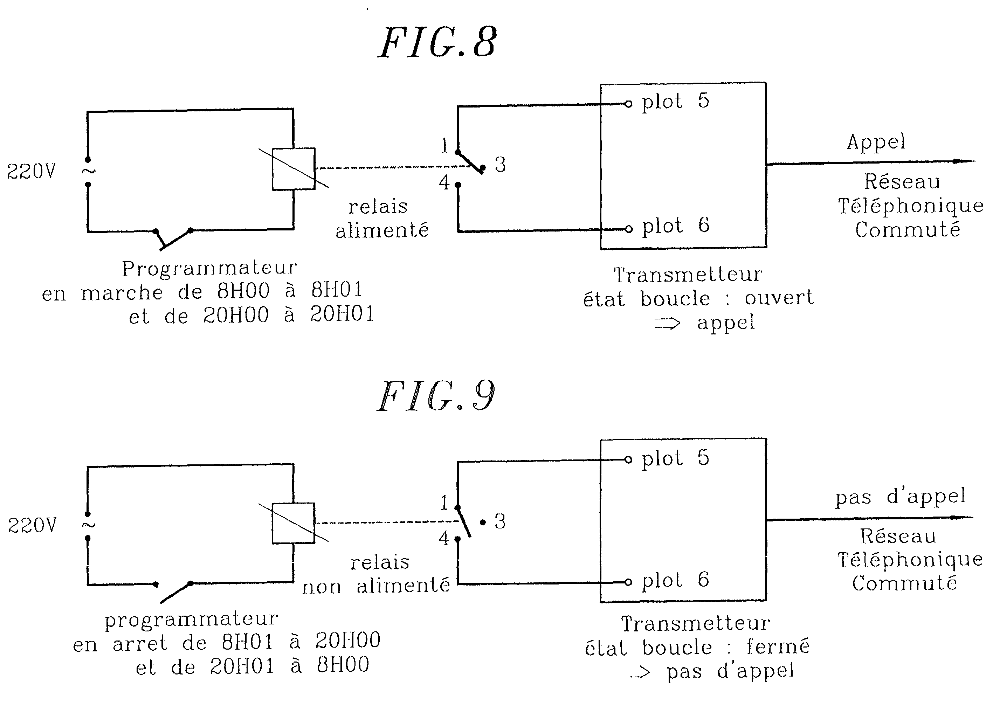

Le principe de fonctionnement est le suivant :
I). Fonctionnement normal : absence de défaut
   Le courant électrique du réseau (220 volts) traverse les 3 différents disjoncteurs (compteur - différentiel haute sensibilité - de circuits) D1, D2, D3 tels que représentés sur la figure 4 ou sur la figure 3, puis les différents interrupteurs commandés par les capteurs et arrive à une multi prise 42. Sur cette dernière est branché un programmateur PR journalier électronique qui est préalablement programmé manuellement pour mettre en marche un appareil électrique, par exemple deux fois par jour à des heures prédéterminées pendant une durée de quelques minutes dt (8h à 8h01 et 20h à 20h01) et ce, tous les jours de la semaine.
   Sur le programmateur journalier PR est branché le relais de commande REL de boucle du transmetteur téléphonique TR, lui-même relié au réseau téléphonique.
   Le courant électrique 220 Volts qui arrive à la multi prise 42, arrive donc au programmateur journalier et 2 fois par jour pendant dt minutes va alimenter le relais de commande de boucle du transmetteur téléphonique et en ouvrant cette boucle va donc numéroter automatiquement le ou les numéros préenregistrés.
   On pourra se reporter aux schémas électriques des figures 8 et 9 pour mieux comprendre le fonctionnement:
   I-A)- le programmateur est en marche de 8h00 à 8h01 et de 20h00 à 20h01; - le relais est alimenté; - la boucle du transmetteur est ouverte; - il y a un appel(cf figure 8).
   I-B)- le programmateur est en arrêt de 8h01 à 20h00 et de 20h01 à 8h00;- le relais est non alimenté ;- la boucle du transmetteur est fermée ;- il n'y a pas d'appel (cf figure 9).

   La personne sur site distant va donc recevoir deux fois par jour et ce tous les jours de la semaine une série de bip ou un message sur son téléphone à fil ou sur radio-téléphone.
   Ceci signifiera pour elle : tout va bien
   Cet auto-test régulier de l'installation et/ou des appareils dont on veut s'assurer du bon fonctionnement est fiable à 100%.
II). En présence de défaut:

Ce défaut peut être du à un défaut d'alimentation du réseau électrique ou à un défaut sur l'installation électrique du site ou à un défaut d'un appareil (électrique ou non) installé sur le site qui va être détecté par un capteur qui va ouvrir le circuit électrique.

Dans l'un ou l'autre des cas (ou tous à la fois) le courant électrique 220 V du réseau ne va pas arriver à la multi prise 42 donc pas au programmateur PR, ni au relais de commande de boucle du transmetteur téléphonique, la boucle restera fermée y compris pendant les dt minutes de programmation.

A l'heure ou d'habitude le transmetteur fait savoir ses résultats d'auto-test (8h01 et 20h01), il n'y aura pas d'appel de transmetteur et donc cela signifie avec certitude qu'il y a un défaut (soit sur l'installation du site, soit sur le transmetteur, soit sur la ligne de téléphone).
1) En cas de défaut sur l'installation à surveiller:
   Le relais n'est plus alimenté même dans la tranche horaire de marche programmée sur le programmateur ce qui revient à la situation I-B. Il n'y a pas d'appel du transmetteur dés l'apparition du défaut. Il faut attendre le prochain cycle de scrutation et l'absence d'appel aux heures régulières de scrutation signifie qu'il y a un défaut.
2) En cas de défaut sur le transmetteur et/ou la ligne téléphonique:
   Il est signalé par l'absence d'appel du transmetteur aux heures régulières de scrutation.

De plus, si le répondeur est branché, la personne sur le site distant peut interroger son répondeur branché sur la multi prise 42 qui confirme alors la présence de défaut.

Le transmetteur TR est utilisé en auto-test de manière à composer le numéro téléphonique prédéterminé de manière systématique tant qu'aucune anomalie n'a été détecté. Ce fonctionnement est inhabituel car les transmetteurs sont au contraire utilisés pour appeler un numéro dès détection d'une anomalie sur l'installation qu'ils surveillent. Mais si eux mêmes ou la ligne téléphonique est en défaut, ils ne peuvent atteindre leur objectif. Cet inconvénient important est par conséquent supprimé par la présente invention.

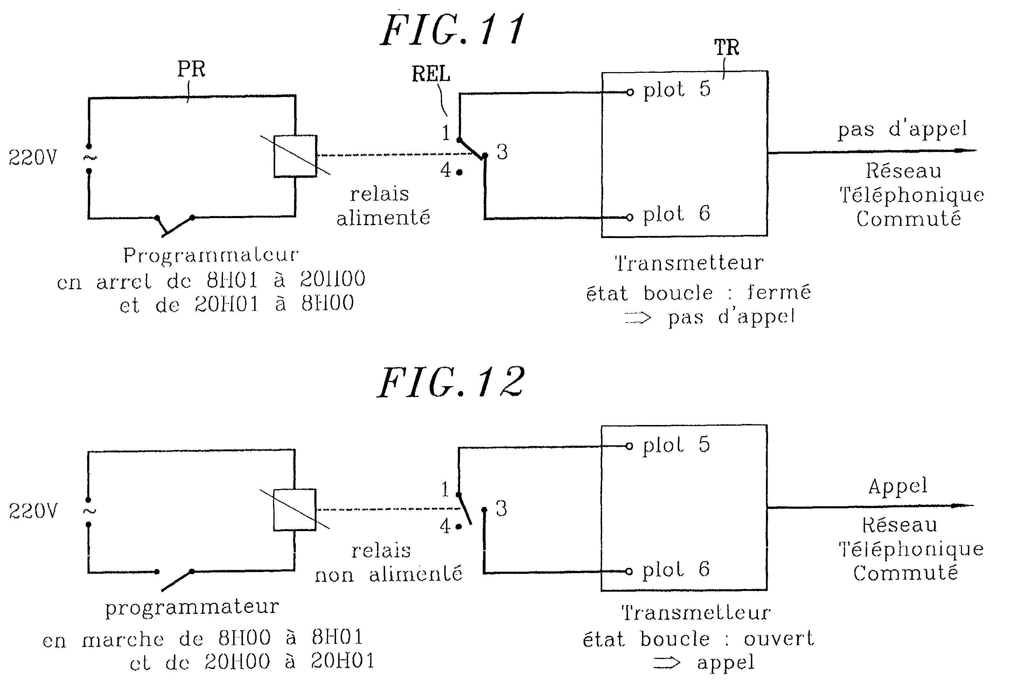

Une variante d'exécution dans le mode de fonctionnement des réalisations données aux figures 7 et 10 est illustrée par les schémas de fonctionnement donnés aux figures 11 et 12.

Il est proposé selon cette variante, que le dispositif soit apte à émettre un message dès que se produirait une anomalie en dehors des plages horaires pendant lesquelles est effectué l'appel systématique tel que décrit précédemment.

La figure 10 représente donc un schéma électrique selon cette variante dans laquelle on associe deux sondes en série S1, S2 avec le transmetteur TR raccordé au programmateur PR via relais REL.

Selon cet exemple, (le schéma de réalisation correspond à celui qui à été décrit à propos de la figure 3) on choisi une sonde de pression d'eau S1 placée sur une pompe à eau et une sonde de température S2 placée dans un congélateur ou dans une chaudière.

Les trois disjoncteurs D1, D2, D3 sont ouverts lorsqu'il y a un défaut sur l'installation intérieure et/ou sur le réseau général et fermés en fonctionnement normal.

Pour le fonctionnement on se reportera donc aux schémas des figures 11 et 12:
I) En fonctionnement normal c'est à dire en l'absence de défaut sur l'installation à surveiller, sur le transmetteur et sur la ligne téléphonique:
   I-A) - le programmateur est en marche de 8h01 à 20h et de 20h01 à 8h;- le relais est alimenté; - la boucle du transmetteur est fermée; - il n'y a pas d'appel.
   I-B) - le programmateur est en arrêt de 8h à 8h01 et de 20h à 20h01; - le relais est non alimenté ; - la boucle du transmetteur est ouverte; - le transmetteur émet un appel.
II) En cas de mauvais fonctionnement:
   1) En présence d'un défaut sur l'installation :
      Le relais n'est plus alimenté même dans la tranche horaire de marche programmée sur le programmateur ce qui revient à la situation I-B, il y a donc un appel du transmetteur dès l'apparition du défaut sans attendre le prochain cycle de scrutation.
   2) En cas de défaut sur le transmetteur et/ou sur la ligne téléphonique:

celui ci est signalé par l'absence d'appel du transmetteur aux heures régulières de scrutation.

En conséquence cette variante de réalisation permet:
- de prévenir dès qu'il y a un défaut sur l'installation,
- une scrutation régulière avec appel systématique signifiant : absence d'anomalie y compris pour le transmetteur et la ligne téléphonique.

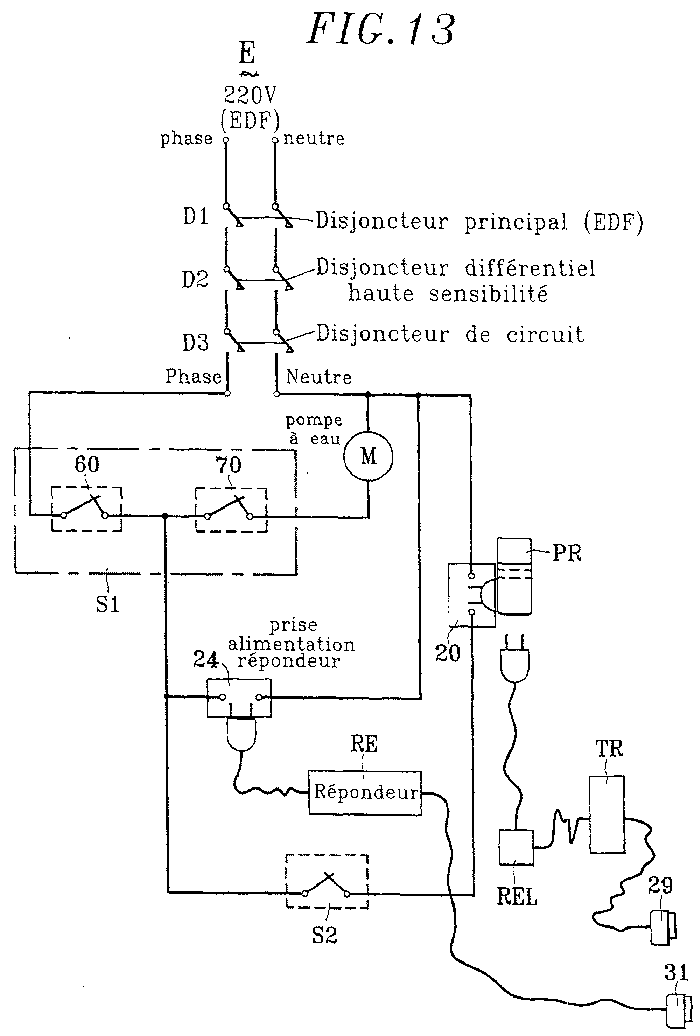

Le schéma de la figure 13 est le même que celui de la figure 10 à ceci prés que dans ce cas de figure on montre le branchement électrique du répondeur téléphonique RE sur ladite installation. Cet arrangement permet de savoir si l'un des deux appareils est en défaut et lequel des deux.

## Revendications

1. Système de télésurveillance du dysfonctionnement d'un ou plusieurs appareils installés sur un site, **caractérisé en ce qu'**il comporte:
- des moyens de détection d'une coupure de l'alimentation électrique générale desdits appareils, ces moyens comprenant un dispositif répondeur-enregistreur téléphonique (RE) susceptible de fournir un message, en l'absence de dysfonctionnement des appareils,
- un ou plusieurs capteurs (CP1, CP2, CP3) aptes à fournir des signaux de mesure significatifs du fonctionnement d'un ou plusieurs appareils du site,
- un ou plusieurs dispositifs à contact (40) agissant en réponse à une coupure de l'alimentation électrique générale des appareils ou en réponse à la commande des capteurs:
- pour couper l'alimentation électrique du répondeur-enregistreur,
ledit répondeur-enregistreur n'étant plus alors apte à fournir de message.

2. Système de télésurveillance du dysfonctionnement d'un ou plusieurs appareils installés sur un site, **caractérisé en ce qu'**il comporte:
- des moyens de détection d'une coupure de l'alimentation électrique générale desdits appareils, ces moyens comprenant un dispositif transmetteur téléphonique (TR) susceptible de fournir un message, en l'absence de dysfonctionnement des appareils,
- un ou plusieurs capteurs (CP1, CP2, CP3) aptes à fournir des signaux de mesure significatifs du fonctionnement d'un ou plusieurs appareils du site,
- un ou plusieurs dispositifs à contact (40) agissant en réponse à une coupure de l'alimentation électrique générale des appareils ou en réponse à la commande des capteurs:
- pour couper l'alimentation électrique d'un relais de commande de boucle de déclenchement du transmetteur téléphonique,
ledit transmetteur n'étant plus alors apte à fournir de message.

3. Système selon la revendication 1 ou 2, **caractérisé en ce que** les dispositifs à contact agissant en interrupteurs d'alimentation électrique dudit répondeur-enregistreur ou dudit relais de commande (REL) de boucle du transmetteur sont des thermostats programmables (40).

4. Système selon les revendications 1 ou 2, **caractérisé en ce que** les dispositifs à contact interrupteurs d'alimentation électrique dudit répondeur-enregistreur ou dudit relais de commande de boucle du transmetteur, sont des programmateurs d'arrosage (50).

5. Système selon les revendications 1 ou 2, **caractérisé en ce que** les capteurs sont des sondes de température d'humidité, de niveau d'eau ou de pression d'hygrométrie (CP1, CP2).

6. Système de télésurveillance du dysfonctionnement d'un ou plusieurs appareils installés sur un site selon la revendication 1, **caractérisé en ce que** le dispositif répondeur-enregistreur comporte en outre une alimentation interne pour l'enregistrement et la sauvegarde des messages représentatifs des signaux délivrés par les capteurs en réponse à la commande des capteurs ou en réponse à une coupure de l'alimentation électrique générale.

7. Système selon l'une quelconque des revendications précédentes, **caractérisé en ce que** les différents dispositifs interrupteurs d'alimentation électrique du répondeur-enregistreur (RE) ou dudit relais de commande (REL) de boucle du transmetteur sont mis en série entre le secteur (220V) et l'alimentation dudit dispositif.

8. Système selon l'une quelconque des revendications précédentes, **caractérisé en ce qu'**il comporte en outre un programmateur (PR) placé entre le relais de commande (REL) du transmetteur (TR) et l'alimentation électrique réseau (E).

## Patentansprüche

1. Funktionsstörungs-Fernüberwachungssystem von einem oder mehreren an einem Ort installierten Geräten,
**dadurch gekennzeichnet, dass** es umfasst:
- Einrichtungen zur Detektion einer Unterbrechung der elektrischen Hauptversorgung dieser Geräte, wobei diese Einrichtungen eine telefonische Anwortgeber-Schreiber-Vorrichtung (RE) umfassen, die bei Nichtvorhandensein von Funktionsstörungen der Geräte eine Nachricht bzw. Mitteilung liefert,
- einen oder mehrere Sensoren (CP1, CP2, CP3), fähig Messsignale zu liefern, die für den Betrieb eines oder mehrerer der am Ort installierten Geräte bedeutsam bzw. bezeichnend sind,
- eine oder mehrere Kontaktvorrichtungen (40), die als Reaktion auf eine Unterbrechung der elektrischen Versorgung der Geräte oder als Reaktion auf den Befehl der Sensoren wirksam werden:
- um die elektrische Versorgung des Antwortgebers-Schreibers zu unterbrechen,
wobei der genannte Antwortgeber-Schreiber dann nicht mehr fähig ist, eine Mitteilung zu liefern.

2. Funktionsstörungs-Fernüberwachungssystem von einem oder mehreren an einem Ort installierten Geräte,
**dadurch gekennzeichnet, dass** es umfasst:
- Einrichtungen zur Detektion einer Unterbrechung der elektrischen Hauptversorgung dieser Geräte, wobei diese Einrichtungen eine telefonische Sendevorrichtung (TR) umfassen, die bei Nichtvorhandensein von Funktionsstörungen der Geräte eine Mitteilung liefert,
- einen oder mehrere Sensoren (CP1, CP2, CP3), fähig Messsignale zu liefern, die für den Betrieb eines oder mehrerer der am Ort installierten Geräte bedeutsam bzw. bezeichnend sind,
- eine oder mehrere Kontaktvorrichtungen (40), die als Reaktion auf eine Unterbrechung der elektrischen Versorgung der Geräte oder als Reaktion auf den Befehl der Sensoren wirksam werden:
- um die elektrische Versorgung eines Auslösungsschleifensteuerungsrelais des telefonischen Senders zu unterbrechen,
wobei der genannte Sender dann nicht mehr fähig ist, eine Mitteilung zu liefern.

3. System nach Anspruch 1 oder 2, **dadurch gekennzeichnet, dass** die Kontaktvorrichtungen, die als Schalter für die elektrische Versorgung des genannten Antwortgebers-Schreibers oder des genannten Schleifensteuerungsrelais (REL) des Senders dienen, programmierbare Thermostate (40) sind.

4. System nach den Ansprüchen 1 oder 2, **dadurch gekennzeichnet, dass** die Kontaktvorrichtungen, die als Schalter für die elektrische Versorgung des genannten Antwortgebers-Schreibers oder des genannten Schleifensteuerungsrelais des Senders dienen, Beregnungsprogrammiergeräte (50) sind.

5. System nach den Ansprüchen 1 oder 2, **dadurch gekennzeichnet, dass** die Sensoren Sonden für die Temperatur, die Feuchtigkeit, den Wasserpegel oder den Luftfeuchtigkeitsdruck (CP1, CP2) sind.

6. Funktionsstörungs-Fernüberwachungssystem von einem oder mehreren an einem Ort installierten Geräten, **dadurch gekennzeichnet, dass** die Antwortgeber-Schreiber-Vorrichtung außerdem eine interne Versorgung zur Aufzeichnung und Sicherung der für die Signale repräsentativen Mitteilungen umfasst, die durch die Sensoren als Reaktion auf den Befehl der Sensoren oder als Reaktion auf eine Unterbrechung der elektrischen Hauptversorgung geliefert werden.

7. System nach einem der vorangehenden Ansprüche, **dadurch gekennzeichnet, dass** die verschiedenen Unterbrechungsvorrichtungen der elektrischen Versorgung des Antwortgebers-Schreibers (RE) oder des genannten Schleifensteuerungsrelais (REL) des Senders zwischen dem Netz (220V) und der Versorgung der genannten Vorrichtung in Serie geschaltet sind.

8. System nach einem der vorangehenden Ansprüche, **dadurch gekennzeichnet, dass** es außerdem ein Programmiergerät (PR) umfasst, angeordnet zwischen dem Steuerrelais (REL) des Senders (TR) und der Stromnetzversorgung (E).

## Claims

1. System for remote monitoring of the dysfunction of one or more devices installed on a site, **characterised in that** it comprises:
- means for detecting a general cut in the electrical power supply to said devices, these means comprising a telephone answering machine (RE) capable of supplying a message in the absence of dysfunction of the devices,
- one or more sensors (CP1, CP2, CP3) designed to supply measurement signals indicative of the function of one or more devices on the site,
- one or more contact elements (40) acting in response to a general cut in the electrical power supply to the devices or in response to the instruction from the sensors to cut the electrical power supply to the answering machine, said answering machine then being no longer able to supply a message.

2. System for remote monitoring of the dysfunction of one or more devices installed on a site, **characterised in that** it comprises:
- means for detecting a general cut in the electrical power supply to said devices, these means comprising a telephone transmitter (TR) capable of supplying a message in the absence of dysfunction of the devices,
- one or more sensors (CP1, CP2, CP3) designed to supply measurement signals indicative of the function of one or more devices on the site,
- one or more contact elements (40) acting in response to a general cut in the electrical power supply to the devices or in response to the instruction from the sensors to cut the electrical power supply of a relay controlling a loop for triggering the telephone transmitter, said transmitter no longer being capable of supplying a message.

3. System according to claim 1 or 2, **characterised in that** the contact elements acting as switches controlling the electrical power supply to said answering machine or to said relay (REL) controlling the loop for the transmitter are programmable thermostats (40).

4. System according to claims 1 or 2, **characterised in that** the contact elements acting as switches controlling the electrical power supply to said answering machine or to said relay controlling the loop for the transmitter are sprinkler programmers (50).

5. System according to claims 1 or 2, **characterised in that** the sensors are temperature, moisture, water level, pressure or hygrometric sensors (CP1, CP2).

6. System for remote monitoring of the dysfunction of one or more devices installed on a site according to claim 1, **characterised in that** the answering machine additionally comprises an internal power supply for recording and saving messages representative of the signals supplied by the sensors in response to the instruction from the sensors or in response to a general cut in the electrical power supply.

7. System according to any one of the preceding claims, **characterised in that** the different elements acting as switches controlling the electrical power supply to the answering machine (RE) or to said relay (REL) controlling the loop for the transmitter are connected in series between the mains (220 V) and the power supply of said device.

8. System according to any one of the preceding claims, **characterised in that** it additionally comprises a programmer (PR) placed between the relay (REL) controlling the transmitter (TR) and the mains electrical power supply (E).
